# EUROPÄISCHE PATENTSCHRIFT

(11) **EP 2 345 801 B1**
(45) Veröffentlichungstag und Bekanntmachung des Hinweises auf die Patenterteilung: **25.06.2014**
(21) Anmeldenummer: 11002670.5
(22) Anmeldetag: 30.04.2004
(51) Int. Cl.: F01M 13/04

(54) **Zentrifugal- Ölabscheider für Blow-By-Gase einer Brennkraftmaschine**
Centrifugal oil separator for blow-by gas of combustion engine
Séparateur centrifuge pour les blow-by gaz d'un moteur à combustion

(30) Priorität: 23.05.2003 DE 10323261
(43) Veröffentlichungstag der Anmeldung: 20.07.2011
(62) Teilanmeldung aus: 04730533.9
(73) Patentinhaber: Daimler AG, 70327 Stuttgart (DE)
(72) Erfinder: Hoffmann, Michael, 71384 Weinstadt (DE); Ruess, Andreas, 71397 Leutenbach (DE)
(74) Vertreter: JENSEN & SON

(56) Entgegenhaltungen:
- EP-A2- 1 008 391
- WO-A1-01/00969

## Beschreibung

Die Erfindung betrifft einen Zentrifugal-Ölabscheider für Blow-By-Gase einer Brennkraftmaschine gemäß dem Oberbegriff des Anspruchs 1.

Derartige Zentrifugal-Ölabscheider werden bei Entlüftungsvorrichtungen des Kurbelgehäuses einer Brennkraftmaschine zum Abscheiden von ÖI aus einem ÖI/Luft-Gemisch verwendet, welches aus dem Zylinderkopf der Brennkraftmaschine abgeleitet wird. Die Entlüftungsleitung für die von dem ÖI gereinigte Luft mündet in die Luftansaugleitung der Brennkraftmaschine. Die Blow-By-Gase werden somit ständig, d.h. in allen Betriebszuständen, aus dem Kurbelraum der Brennkraftmaschine abgesaugt und in die Ansaugleitung zurück gefördert, wodurch sie einer erneuten Verbrennung in den Zylindern zugeführt werden. Durch eine solche Entlüftung der Blow-By-Gase verringert sich die Verschmutzung des Öls erheblich, wodurch sich viel längere Ölwechselintervalle ergeben können.

Ein derartiger Zentrifugal-Ölabscheider für Blow-By-Gase einer Brennkraftmaschine ist beispielsweise aus der DE 196 07 919 A1 oder der DE 199 47 143 C1 bekannt. Der in der DE 196 07 919 A1 beschriebene Zentrifugal-Ölabscheider zeichnet sich durch eine besonders effektive Ölabscheidung aus den Blow-By-Gasen aus, während der in der DE 199 47 143 C1 offenbarte Zentrifugal-Ölabscheider in einer besonders kompakten Konstruktion aufgebaut ist.

Die Patentanmeldung WO 01/000969 A1 offenbart einen Zentrifugal-Ölabscheider für Blow-By-Gase einer Brennkraftmaschine, mit einem rotierenden Bauelement, das eine Antriebswelle zum Drehantrieb des rotierenden Bauelements aufweist, wobei die Antriebswelle mit einem hydraulischen Antrieb verbunden ist, der in eine Fluidleitung der Brennkraftmaschine integriert ist.

Der vorliegenden Erfindung liegt demgegenüber die Aufgabe zugrunde, einen Zentrifugal-Ölabscheider mit einem einfachen und kostengünstigen Drehantrieb seines rotierenden Bauelements bereitzustellen.

Der erfindungsgemäße Zentrifugal-Ölabscheider für Blow-By-Gase einer Brennkraftmaschine zeichnet sich dadurch aus, dass die Antriebswelle des rotierenden Bauelements mit einem hydraulischen Antrieb verbunden ist, der in eine Fluidleitung der Brennkraftmaschine integriert ist. Auch in diesem Fall werden bereits vorhandene Komponenten einer Brennkraftmaschine für den Drehantrieb der Antriebswelle des Zentrifugal-Ölabscheiders genutzt, weshalb der Zentrifugal-Ölabscheider der Erfindung technisch einfach und kostengünstig zu realisieren ist. Dabei ist der hydraulische Antrieb in eine zu der Brennkraftmaschine führende Kraftstoffleitung integriert.

In einer alternativen Ausgestaltung der Erfindung ist der hydraulische Antrieb in einen Niederdruck-Kraftstoffkreislauf zwischen einer Kraftstoff-Förderpumpe und einer Kraftstoff-Hochdruckpumpe integriert. Es kann davon ausgegangen werden, dass die Kraftstoffpumpe in einigen Betriebszuständen der Brennkraftmaschine eine überschüssige Kraftstoffmenge fördert, deren überschüssige Energie somit für den Antrieb des Zentrifugal-Ölabscheiders verwendet werden kann, ohne eine zusätzliche Energie aufbringen zu müssen.

In einer weiteren Ausgestaltung der Erfindung kann bei dem Zentrifugal-Ölabscheider zwischen der Antriebswelle und dem hydraulischen Antrieb eine regelbare Kupplung zur Steuerung der Drehzahl des rotierenden Bauelements des Zentrifugal-Ölabscheiders vorgesehen sein.

Weitere Merkmale und Merkmalskombinationen ergeben sich aus der Beschreibung sowie den Zeichnungen. Konkrete Ausführungsbeispiele der Erfindung sind in den Zeichnungen vereinfacht dargestellt und in der nachfolgenden Beschreibung näher erläutert. Es zeigen:
- Fig. 1: ein stark vereinfachtes Blockschaltbild des Drehantriebs eines Zentrifugal-Ölabscheiders;
- Fig. 2: ein stark vereinfachtes Blockschaltbild einer alternativen Ausführungsform eines Zentrifugal-Ölabscheiders gemäß Fig. 1; und
- Fig. 3: ein stark vereinfachtes Blockschaltbild des Drehantriebs eines Zentrifugal-Ölabscheiders gemäß der vorliegenden Erfindung.

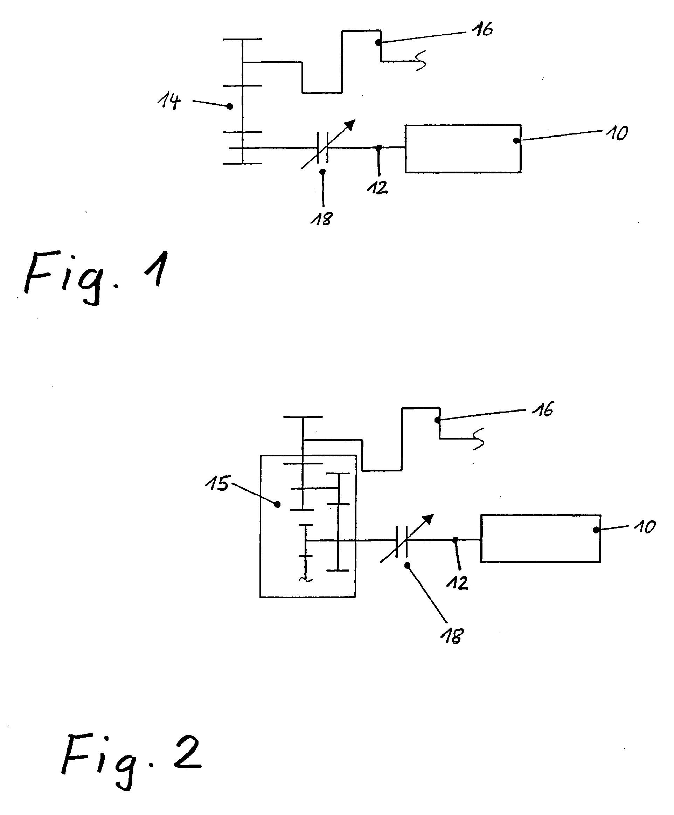

Der in Figur 1 mit der Bezugsziffer 10 gekennzeichnete Zentrifugal-Ölabscheider für Blow-By-Gase, die aus dem Kurbelgehäuse einer Brennkraftmaschine abgeleitet werden, weist ein rotierendes Bauelement auf, welches mit einer Antriebswelle 12 zum Drehantrieb versehen ist. Das rotierende Bauelement weist in üblicher Weise wenigstens eine Einströmöffnung für die Einleitung von Blow-By-Gasen aus dem Kurbelgehäuse der Brennkraftmaschine, wenigstens eine erste Abströmöffnung für die Ableitung von Luft und wenigstens eine zweite Abströmöffnung für die Ableitung von Öl auf. Es sei an dieser Stelle ausdrücklich darauf hingewiesen, dass die vorliegende Erfindung nicht auf eine spezielle Konstruktion eines Zentrifugal-Ölabscheiders beschränkt ist, sondern dass vielmehr beliebige Konstruktionen von Zentrifugal-Ölabscheidern verwendet werden können, deren rotierendes Bauelement mit einer Antriebswelle gekoppelt ist.

Die Antriebswelle 12 des rotierenden Bauelements des Zentrifugal-Ölabscheiders 10 ist in dem Ausführungsbeispiel von Figur 1 mittels einer mechanischen Kopplung (nicht dargestellt) mit einem Zahnräderwechselgetriebe 14 verbunden. Das Zahnräderwechselgetriebe 14 wird in üblicher Weise durch die Kurbelwelle 16 der Brennkraftmaschine angetrieben. Bei dem Zentrifugal-Ölabscheider 10 gemäß dem in Figur 1 dargestellten Ausführungsbeispiel ist somit lediglich eine mechanische Kopplung zu bereits bestehenden Komponenten der Brennkraftmaschine, in diesem Fall dem Zahnräderwechselgetriebe, erforderlich. Bei einer geeigneten Übersetzung der mechanischen Kopplung zwischen der Antriebswelle 12 und dem Zahnräderwechselgetriebe 14 können problemlos die erforderlichen Drehzahlen des Zentrifugal-Ölabscheiders 10 erzielt werden.

Wie in Figur 1 dargestellt, kann zwischen der Antriebswelle 12 des Zentrifugal-Ölabscheiders 10 und dem Zahnräderwechselgetriebe 14 optional eine regelbare Kupplung 18 vorgesehen sein, um die Drehzahl der Antriebswelle 12 und damit des rotierenden Bauelements des Zentrifugal-Ölabscheiders 10 zu steuern.

Figur 2 zeigt eine alternative Ausführungsform von Figur 1 für den Drehantrieb eines Zentrifugal-Ölabscheiders 10. Gleiche Komponenten bzw. Bauteile dieser alternativen Ausführungsform sind mit den gleichen Bezugsziffern wie in dem Ausführungsbeispiel von Figur 1 versehen.

Die Antriebswelle 12 des rotierenden Bauelements des Zentrifugal-Ölabscheiders 10 ist in der Ausführungsform von Figur 2 mit einem Turbocompoundgetriebe 15 über eine geeignete mechanische Kopplung verbunden. Das Turbocompoundgetriebe wird in bekannter Weise von der Kurbelwelle 16 der Brennkraftmaschine angetrieben. Die Kopplung der Antriebswelle 12 des rotierenden Bauelements des Zentrifugal-Ölabscheiders 10 mit einem Turbocompoundgetriebe 15 hat den Vorteil, dass aufgrund des hohen Drehzahlniveaus des Turbocompoundgetriebes 15 im allgemeinen keine weitere Übersetzung der mechanischen Kopplung zwischen der Antriebswelle 12 und dem Getriebe 15 erforderlich ist, um die hohen Drehzahlen des Zentrifugal-Ölabscheiders 10 zu erreichen. Auch bei dieser Ausführungsform ist es jedoch möglich, zwischen der Antriebswelle 12 des Zentrifugal-Ölabscheiders 10 und dem Turbocompoundgetriebe 15 eine regelbare Kupplung 18 zur Steuerung der Drehzahl der Antriebswelle 12 bzw. des rotierenden Bauelements des Zentrifugal-Ölabscheiders 10 vorzusehen.

Während bei den in Figuren 1 und 2 dargestellten Ausführungsbeispielen des Zentrifugal-Ölabscheiders gemäß dem ersten Aspekt der vorliegenden Erfindung die Antriebswelle des Zentrifugal-Ölabscheiders mit einem Zahnräderwechselgetriebe bzw. einem Turbocompoundgetriebe gekoppelt ist, ist die vorliegende Erfindung grundsätzlich auch für andere Getriebearten, die über die Kurbelwelle der Brennkraftmaschine angetrieben werden, anwendbar.

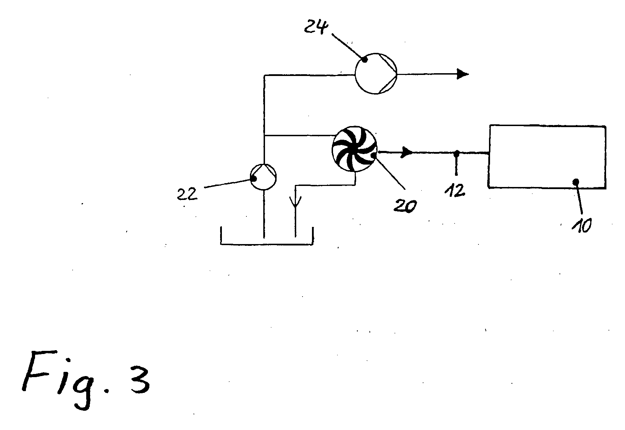

Es wird nun anhand von Figur 3 ein Drehantrieb eines Zentrifugal-Ölabscheiders gemäß dem zweiten Aspekt der vorliegenden Erfindung näher erläutert.

Der grundsätzlich beliebig aufgebaute Zentrifugal-Ölabscheider 10 weist ein rotierendes Bauelement auf, das mit einer Antriebswelle 12 verbunden ist. Ferner weist das rotierende Bauelement des Zentrifugal-Ölabscheiders wenigstens eine Einströmöffnung für die Einleitung von Blow-By-Gasen aus dem Kurbelgehäuse der Brennkraftmaschine, wenigstens eine erste Abströmöffnung für die Ableitung von Luft und wenigstens eine zweite Abströmöffnung für die Ableitung von Öl auf.

Die Antriebswelle 12 des rotierenden Bauelements des Zentrifugal-Ölabscheiders ist, wie in Figur 3 dargestellt, mit einem hydraulischen Antrieb 20 verbunden. Der hydraulische Antrieb 20 ist in eine vorhandene Fluidleitung der Brennkraftmaschine integriert, sodass auch dieser Drehantrieb des Zentrifugal-Ölabscheiders aufgrund der Verwendung bereits vorhandener Komponenten der Brennkraftmaschine technisch einfach und kostengünstig zu realisieren ist.

In dem in Figur 3 dargestellten Ausführungsbeispiel ist der hydraulische Antrieb 20 der Antriebswelle 12 des Zentrifugal-Ölabscheiders 10 in einen Niederdruck-Kraftstoffkreislauf zwischen einer Kraftstoff-Förderpumpe 22 und einer Kraftstoff-Hochdruckpumpe 24 integriert. Hierbei wird ein Teil des von der Kraftstoff-Förderpumpe geförderten Kraftstoffvolumenstroms in dem hydraulischen Antrieb 20 in Drehenergie umgesetzt und auf die Antriebswelle 12 übertragen. Als besonderer Vorteil dieser Ausführungsform des Drehantriebs des Zentrifugal-Ölabscheiders 10 kann angesehen werden, dass durch das Anbringen eines geeigneten hydraulischen Antriebs 20 in den bereits vorhandenen Kraftstoffkreislauf relativ einfach die erforderliche Drehbewegung der Antriebswelle 12 und damit des rotierenden Bauelements des Zentrifugal-Ölabscheiders 10 erreicht werden kann. Zudem ist davon auszugehen, dass die Kraftstoff-Förderpumpe 22 in einigen Betriebszuständen der Brennkraftmaschine eine überschüssige Kraftstoffmenge fördert, deren Energie somit für den Drehantrieb des Zentrifugal-Ölabscheiders 10 verwendet werden kann, ohne zusätzliche Energie aufbringen zu müssen.

In einer alternativen Ausführungsform des in Figur 3 dargestellten Drehantriebs kann der hydraulische Antrieb 20 auch direkt in eine zu der Brennkraftmaschine führende Kraftstoffleitung integriert sein. Ferner ist es auch bei dem Zentrifugal-Ölabscheider gemäß dem zweiten Aspekt der Erfindung möglich, zwischen der Antriebswelle 12 des rotierenden Bauelements des Zentrifugal-Ölabscheiders 10 und dem hydraulischen Antrieb 20 eine regelbare Kupplung (nicht dargestellt) vorzusehen, um die Drehzahl der Antriebswelle 12 des Zentrifugal-Ölabscheiders zu steuern.

## Patentansprüche

1. Zentrifugal-Ölabscheider (10) für Blow-By-Gase einer Brennkraftmaschine, mit einem rotierenden Bauelement, das wenigstens eine Einströmöffnung für die Einleitung von Blow-By-Gasen aus dem Kurbelgehäuse der Brennkraftmaschine, wenigstens eine erste Abströmöffnung für die Ableitung von Luft und wenigstens eine zweite Abströmöffnung für die Ableitung von ÖI sowie eine Antriebswelle (12) zum Drehantrieb des rotierenden Bauelements aufweist, wobei die Antriebswelle (12) des rotierenden Bauelements mit einem hydraulischen Antrieb (20) verbunden ist, der in eine Fluidleitung der Brennkraftmaschine integriert ist,
**dadurch gekennzeichnet, dass**
der hydraulische Antrieb (20) in eine zu der Brennkraftmaschine führende Kraftstoffleitung integriert ist.

2. Zentrifugal-Ölabscheider nach Anspruch 1,
**dadurch gekennzeichnet, dass**
der hydraulische Antrieb (20) in einen Niederdruck-Kraftstoffkreislauf zwischen einer Kraftstoff-Förderpumpe (22) und einer Kraftstoff-Hochdruckpumpe (24) integriert ist.

3. Zentrifugal-Ölabscheider nach einem der Ansprüche 1 oder 2,
**dadurch gekennzeichnet, dass**
zwischen der Antriebswelle (12) des Zentrifugal-Ölabscheiders (10) und dem hydraulischen Antrieb (20) eine regelbare Kupplung zur Steuerung der Drehzahl des rotierenden Bauelements des Zentrifugal-Ölabscheiders vorgesehen ist.

## Claims

1. Centrifugal oil separator (10) for blow-by gases of an internal combustion engine, comprising a rotating component which comprises at least one inflow opening for the introduction of blow-by gases from the crankcase of the internal combustion engine, at least one first outflow opening for the discharge of air and at least one second outflow opening for the discharge of oil, and further comprising a drive shaft (12) for the rotary drive of the rotating component, wherein the drive shaft (12) of the rotating component is connected to a hydraulic drive (20) which is integrated into a fluid line of the internal combustion engine,
**characterised in that**
the hydraulic drive (20) is integrated into a fuel line leading to the internal combustion engine.

2. Centrifugal oil separator according to claim 1,
**characterised in that**
the hydraulic drive (20) is integrated between a low-pressure fuel circuit of a fuel supply pump (22) and a high-pressure fuel pump (24).

3. Centrifugal oil separator according to claim 1 or claim 2,
**characterised in that**
a controllable clutch for controlling the speed of the rotating component of the centrifugal oil separator is provided between the drive shaft (12) of the centrifugal oil separator (10) and the hydraulic drive (20).

## Revendications

1. Séparateur d'huile centrifuge (10) pour les fuites des gaz d'un moteur à combustion interne, doté d'un élément tournant, qui présente au moins un orifice d'entrée d'écoulement pour l'introduction de gaz de carter provenant du carter de vilebrequin du moteur à combustion interne, au moins un premier orifice d'évacuation pour l'évacuation de l'air et au moins un second orifice d'évacuation pour l'évacuation de l'huile ainsi qu'un arbre de transmission (12) destiné à l'entraînement rotatif de l'élément tournant, l'arbre de transmission (12) de l'élément tournant est relié à un entraînement hydraulique (20), qui est intégré dans une conduite de fluide du moteur à combustion interne, **caractérisé en ce que** l'entraînement hydraulique (20) est intégré dans une conduite de carburant conduisant au moteur à combustion interne.

2. Séparateur d'huile centrifuge (10) selon la revendication 1, **caractérisé en ce que** l'entraînement hydraulique (20) est intégré dans un circuit de carburant basse pression entre la pompe d'alimentation de carburant (22) et une pompe haute pression de carburant (24).

3. Séparateur d'huile centrifuge selon l'une quelconque des revendications 1 à 2, **caractérisé en ce qu'**entre l'arbre de transmission (20) du séparateur d'huile centrifuge (10) et l'entraînement hydraulique (20) est disposé un accouplement réglable destiné à réguler la vitesse de l'élément tournant du séparateur d'huile centrifuge.
